# EUROPEAN PATENT APPLICATION

(11) **EP 0 714 959 A2**
(43) Date of publication of application: **05.06.1996**
(21) Application number: 95118864.8
(22) Date of filing: 30.11.1995
(51) Int. Cl.: C09D 7/00, C09D 5/36, B05D 1/36

(54) **Paints for repairing lustrous agent-containing films and repairing process**

(30) Priority: 01.12.1994 JP 323717/94
(71) Applicant: Nippon Paint Co., Ltd., Kita-ku, Osaka-shi, Osaka 531 (JP)
(72) Inventor: Yamane, Isao, Hiroshima-shi, Hiroshima (JP)
(74) Representative: Hansen, Bernd, Dr. Dipl.-Chem.

(57) **Abstract**

A repair paint for restoring a faulty portion of a multi-coated film including an intermediate coated film, a lustrous agent-containing topcoated film and a clear film formed as required, or a spray dust portion painted in a different color on a surface of the intermediate coated film is disclosed, wherein said paint comprises a pigment of the same family as that of said intermediate coated film and a vehicle resin of the same family as that of said lustrous agent-containing topcoated film, and fulfills the requirements that (A) the ratio (PWC₂/PWC₁) of the pigment content by weight of the repair paint (PWC₂) to the pigment content by weight of an intermediate-coating paint (PWC₁) is 0.5 to 0.9 and (B) the lightness difference (N value) in the Munsell lightness indication system between a repaired film and the intermediate coating film after film formation is 2 or less, and a process for repairing a lustrous agent-containing film is also disclosed, which comprises applying the repair paint described above to a faulty portion or a spray dust portion, and then forming a lustrous agent-containing topcoated film and a clear film as required in turn.

## Description

### FIELD OF THE INVENTION

The present invention relates to a repair paint effective for restoring faulty portions or spray dust portions of lustrous agent-containing films applied to, for example, bodies or parts of automobiles without discord in luster and hue between nonrepaired film surfaces and repaired film surfaces, and a repairing process thereof.

### BACKGROUND OF THE INVENTION

For example, in order to form imposing glossily metallic lustrous films on automobile bodies, paints containing metallic pigments and/or mica pigments have previously been used in many case. These films coated are generally formed by multi-coating processes in which the above-described lustrous agent-containing paints containing metallic pigments and/or mica pigments are applied to film surfaces undercoated and intermediate coated, and clear coated films are further formed thereon.

For the lustrous agent-containing films thus-formed, when coating defects such as "sagging", "pin holes" and "cratering" are generated in stages of body coating lines, adhered dust is required to be removed, or coated surfaces of the bodies are damaged by contact accidents, it is necessary to repair such portions by coating so that color tones visually become the same. In the repairing processes previously employed, the portions to be repaired are subjected to sanding treatment, then, paints color-matched so as to give the same color tones as those of the lustrous agent-containing films are applied plural times thereto by means of air spray guns, and finally, clear coating is carried out thereon. However, the partial repairing means of this kind are very difficult to conduct color-toning operations for obtaining the same color tones, and moreover, they are liable to produce phenomena such as occurrence of the differences in luster and hue between nonrepaired film surfaces and repaired film surfaces and the appearance of streaks (rings) on coating boundary portions.

Many improving techniques have therefore been proposed with respect to coating techniques for repairing the lustrous agent-containing films. For example, JP-B-53-25844 (the term "JP-B" as used herein means an "examined Japanese patent publication") discloses a process in which a metallic color film is coated for repairing with a repair metallic color paint comprising a metallic pigment in an amount of about 5% to about 50% by weight lower than that of a solid vehicle of said metallic color film and pigments other than the metallic pigment in the same amount or slightly lower amounts. Further, JP-A-63-93380 (the term "JP-A" as used herein means an unexamined published Japanese patent application") discloses a process for partial repair comprising conducting base-grinding on a portion of a film to be repaired to the depth reaching a topcoated film, then applying in a strip form a repair topcoating paint adjusted to the same color and resin as those of a topcoating paint and to a lower pigment concentration and viscosity, subsequently forming a repair topcoated film over the entire surface of the portion to be repaired using a paint of a kind similar to that of the topcoating paint, and further forming a clear film thereon by a wet-on-wet coating method. Still further, JP-A-3-293060 discloses a process for repairing an aqueous metallic film comprising the first step of grinding a faulty coated portion, followed by application of an aqueous clear paint in which pigments and metal powders are removed from an aqueous metallic base paint identical to the paint initially applied, over the range of about 1.5 to about 2 times diameter of the ground portion, the second step of applying the aqueous metallic base paint by a wet-on-wet coating method over such a range that it covers the ground portion, and the third step of applying a solvent type clear paint after flush off. Furthermore, JP-A-4-145981 discloses a process for repairing a film comprising the steps of grinding a portion to be repaired of a colored coated portion, applying a clear paint to the ground portion, applying a paint used in color coating, baking the clear paint and the coloring paint, and grinding a boundary portion between a nonrepaired film surface and a repaired film surface to smoothen it, in this order.

Visual discord frequently observed in repairing a lustrous films is a phenomenon that even though the hue of a repaired film surface is equivalent to that of a nonrepaired film surface at a highlighted portion (wherein the visual angle is an angle nearly perpendicular to the coated surface), it looks blackish at a shaded portion (wherein the visual angle is an angle nearly parallel to the coated surface). This hue difference is largely due to the difference in luster caused by changes in the orientation of lustrous pigment particles contained in the film coated between the nonrepaired film surface and the repaired film surface. That is, when the lustrous film is formed by electrostatic coating in the production line, the lustrous pigment particles are randomly orientated in the film coated because of a high flow rate of a paint and the influence of static electricity. On the other hand, when the paint is applied by means of a spray gun in repairing, the lustrous pigment particles are orientated in parallel with a film surface in the film coated because of an extremely low flow rate (about 1/4) of the paint. For this reason, a large difference arises between the flip-flop property to the nonrepaired film surface (the lightness difference due to the angle) and the color-flop property (the hue difference due to the angle). However, it has been difficult to effectively erase the difference in luster based on this phenomenon by the conventional coating methods for repair.

On the other hand, in order to locally coat only a sash in black, coating of an automobile body comprises the step of applying a sash black paint to a specified portion in the vicinity of the sash by a wet-on-wet coating method according to a manual spraying operation, after coating the body with an intermediate coating paint (gray or dark gray) by use of an automatic coating machine in an intermediate coating booth. In this coating step, the portion coated with the sash black paint is masked, and thereafter, subjected to topcoat coating by use of an automatic coating machine. A spray dust portion formed by spray coating into a door or a roof in sash black coating is subjected to topcoat coating as it is, which finally results in occurrence of the hue differences between the spray dust portion and other films coated. The spray dust portion is therefore also required to be partially repaired as a faulty coated portion. However, any repair paint fully effective for such a spray dust portion painted in a different color have not developed in the prior art.

Furthermore, when a faulty coated portion produced on an intermediate coated film surface is repaired in the coating line of an automobile body, use of an intermediate coating paint for repair necessitates formation of an intermediate coated film repaired and a topcoated film in the wet-on-wet state, because the faulty coated portion after grinding is repaired in the topcoat coating step. In this case, the wet-on-wet property of both the films is not said to be sufficient, and poor appearance is liable to occur. In order to solve such a problem, a step for drying the intermediate coated film repaired becomes necessary.

### SUMMARY OF THE INVENTION

An object of the present invention is therefore to provide a paint for repairing a lustrous agent-containing film, which reduces the hue difference between a repaired film and a nonrepaired film, has good wet-on-wet property with a topcoating paint, and can always give the same color tone and luster over a wide color range, when a faulty portion or a spray dust portion of a multi-coated film including a lustrous agent-containing topcoated film is restored.

Another object of the present invention is to provide a repairing method using the above-described paints.

One aspect of the present invention relates to a paint for repairing a lustrous agent-containing film, a paint for restoring-a faulty portion of a multi-coated film including an intermediate coated film, a lustrous agent-containing topcoated film, and a clear film formed as required, or a spray dust portion painted in a different color on a surface of the intermediate coated film, said paint comprising a pigment of the same family as that of said intermediate coated film and a vehicle resin of the same family as that of said lustrous agent-containing topcoated film, and fulfilling the following requirements (A) and (B):
(A) The ratio (PWC₂/PWC₁) of the pigment content by weight of the repair paint (PWC₂) to the pigment content by weight of an intermediate coating paint (PWC₁) is 0.5 to 0.9; and
(B) The lightness difference (N value) in the Munsell lightness indication system between a repaired film and the intermediate coated film after film formation is 2 or less (in this case, a difference of 2 or less means that it is within the range of -2 to +2).

Another aspect of the present invention relates to a process for repairing a lustrous agent-containing film, which comprises applying the repair paint described above to a faulty portion or a spray dust portion to form a repaired film, and then forming a lustrous agent-containing topcoated film, and a clear film as required in turn.

### DETAILED DESCRIPTION OF THE INVENTION

The repair coating system in the present invention is a multi-coated film in which intermediate coating, topcoating, and clear coating as required are conducted on each of various substrate to be coated. Materials of the substrates to be coated include, for example, inorganic materials such as glass, cement and concrete, moldings of resins such as polyethylene, polypropylene, ethylene-vinyl acetate copolymers, polyamides, acrylic polymers, polyesters, ethylene-vinyl alcohol copolymers, polyvinyl chloride, polyvinylidene chloride, polycarbonates and polyurethane, plastic materials such as various FRPs, wood and fiber, as well as metals such as iron, aluminum, copper and alloys thereof. These substrates to be coated may be previously subjected to appropriate undercoating or pre-coating treatment. The coating may be directly performed on the substrates to be coated. However, for example, in the coating of automobile bodies, undercoating is usually conducted with electrodeposition paints after surface chemical conversion treatment, and the resulting films are hardened, followed by multi-coating processes.

Intermediate coated films are formed to cover defects of the substrates, to secure the surface smoothness after topcoating, and to give chipping resistance. They are formed using intermediate coating paints containing various organic or inorganic color pigments and extender pigments. Examples of the color pigments used in the intermediate coating paints include organic pigments such as azo lake pigments, insoluble azo pigments, condensed azo pigments, phthalocyanine pigments, indigo pigments, perynone pigments, perylene pigments, dioxazine pigments, quinacridone pigments, isoindolinone pigments and metal complex pigments, and inorganic pigments such as chrome yellow, yellow iron oxide, red iron oxide, carbon black and titanium oxide. Examples of extender pigments include calcium carbonate, ballium sulfate, clay and talc. As a standard, a gray intermediate coating paint mainly composed of carbon black and titanium oxide is frequently used. However, a so-called color intermediate coating paint which is a combination of the above-described color pigments may also be used.

As the form of the paints, the solution type is preferably used. They may be of any type of the organic solvent type, the aqueous (aqueous solution, aqueous dispersion or emulsion) type and the non-aqueous dispersion type as long as they are of the solution type. Examples of available vehicles of the intermediate coating paints include resin compositions comprising base resins such as acrylic resins, polyester resins, alkyd resins and epoxy-modified polyester resins and crosslinking agents such as amino resins and (block) polyisocyanate compounds; and two-pack type polyurethane resins and silicone resins which are hardenable on drying at ordinary temperature. The intermediate coating paints are prepared by compounding the vehicle resins and the color pigments described above so as to give desired hue to films formed. The solid content is preferably 30 to 70% by weight at production, and 10 to 50% by weight at coating. The dried film thickness of intermediate coated films formed by coating is generally 25 to 50 µm, and preferably 30 to 40 µm.

Besides, a paint having a chipping-absorbing function, which is called a chipping-resistant primer, can also be used as the intermediate coating paint. The chipping-resistant primer can be used alone as the intermediate coating paint, and can also be used in the step before and/or after the intermediate coating.

Topcoated films are formed in the base coat coating step using lustrous agent-containing topcoating paints. As the lustrous agent added to the topcoating paint, there is used, for example, at least one selected from the group consisting of fine metallic flakes such as aluminum flakes, bronze flakes, tin flakes, gold flakes, silver flakes, titanium metal flakes, stainless steel flakes and nickel-copper flakes, and mica flakes such as pearl mica (white mica), interference mica and colored mica. The lustrous agent-containing topcoating paints of the solution type are preferably used. They may be of any type of the organic solvent type, the aqueous (aqueous solution, aqueous dispersion or emulsion) type and the non-aqueous dispersion type as long as they are of the solution type. The lustrous paints may contain the above-described organic or inorganic color pigments and/or extender pigments if necessary. They may further contain curing catalysts, ultraviolet absorbers, antioxidants and surface regulating agents according to their purpose.

Examples of available vehicles of the lustrous agent-containing topcoating paints include resin compositions comprising film-forming resins such as acrylic resins, polyester resins, alkyd resins and fluorine resins and crosslinking agents such as amino resins and/or block polyisocyanate compounds. Preferred compositions are combinations of acrylic resins and amino resins and/or block polyisocyanate compounds. The solid content in the paints is preferably 30 to 70% by weight at production, and 10 to 50% by weight at coating. The dried film thickness of topcoated films formed by coating is 10 to 30 µm.

Preferably, clear coating is conducted on surfaces of the lustrous agent-containing topcoated films. Clear paints used in the clear coating have resin components belonging to the same family as the above-described lustrous agent-containing topcoating paints. Further, color pigments and various additives can be added within the range of no deterioration of transparency. It is preferred that at least one clear film having a dried film thickness of 30 to 60 µm is formed.

In the coating of automobile bodies, in order to locally coat only the sashes in black, the sash black paints are applied to surfaces of the intermediate coated films. The sash black paints are mainly comprising carbon black as the pigment, and prepared by compounding the same vehicles and additives as those of the above-described lustrous agent-containing topcoating paints.

The repair paints of the present invention for restoring the faulty portions or the spray dust portions of the multi-coated films including the intermediate coated films, the lustrous agent-containing topcoated films, and the clear films formed as required are prepared using pigments belonging to the same family as the intermediate coated films and vehicle resins belonging to the same family as the lustrous agent-containing topcoating paints as components.

That is, of organic pigments such as azo lake pigments, insoluble azo pigments, condensed azo pigments, phthalocyanine pigments, indigo pigments, perynone pigments, perylene pigments, dioxazine pigments, quinacridone pigments, isoindolinone pigments and metal complex pigments; and inorganic pigments such as chrome yellow, yellow iron oxide, red iron oxide, carbon black and titanium oxide, and extender pigments such as calcium carbonate, ballium sulfate, clay and talc (preferably mixed pigments of carbon black and titanium oxide), the same ones as used in the intermediate coating paints are used as the pigments. Further, of mixtures of film-forming resins such as acrylic resins, polyester resins, alkyd resins and fluorine resins and crosslinking agents such as amino resins and/or block polyisocyanate compounds (preferably combinations of acrylic resins and amino resins and/or block polyisocyanate compounds), the same ones as used in the lustrous agent-containing topcoating paints are used as the vehicle resins. The paints of the solution type are preferably used. They may be of any type of the organic solvent type, the aqueous (aqueous solution, aqueous dispersion or emulsion) type and the non-aqueous dispersion type as long as they are of the solution type.

In the above-described paint system, the following requirements are indispensable to the present invention:
(A) The ratio (PWC₂/PWC₁) of the pigment content by weight of the repair paint (PWC₂) to the pigment content by weight of an intermediate coating paint (PWC₁) is 0.5 to 0.9, and preferably 0.6 to 0.8; and
(B) The lightness difference (N value) in the Munsell lightness indication system between the repaired film and the intermediate coating film after film formation is 2 or less, and preferably 1.5 or less.

If the ratio (PWC₂/PWC₁) is not within the range of 0.5 to 0.9, a difference in the degree of luster arises between the intermediate coated film and the repaired film, as a result, discord in hue between a nonrepaired portion and a repaired portion is generated. Further, if the lightness difference (N value) between the repaired film and the intermediate coated film exceeds 2, the color feeling of the repaired film has an influence on the topcoated film successively formed thereon to produce the color difference between the nonrepaired potion and the repaired portion. In both cases, the normal repairing effect can not be obtained. The paint compositions fulfilling the requirements (A) and (B) can be prepared by controlling preparation of pigment components and the compounding ratio thereof to the vehicle resins.

The method for repairing the lustrous agent-containing film according to the present invention comprises grinding the faulty portion of the multi-coated film including the intermediate coated film, the lustrous agent-containing topcoated film, and the clear film formed as required, applying the repair paint described above thereto to form the repaired film, and then forming the lustrous agent-containing topcoated film, and the clear film as required in turn.

The faulty portion to be repaired is ground, and the ground surface is washed and then dried. Thereafter, the repair paint is applied over such a range that it covers at least the faulty portion by an atomizing coating method or a roller coater coating method, preferably air spray coating or electrostatic coating means of the atomizing coating method. Then, (1) the lustrous agent-containing topcoated film is formed by use of a topcoating paint having the same composition as the nonrepaired portion, and the clear film is formed by use of a clear paint having the same composition as the nonrepaired portion as required, or (2) the lustrous agent-containing topcoated film is formed over the entire surface, and the clear film is formed as required, thereby forming the multi-coated repaired film.

When the spray dust portion coated with a different color on the surface of the intermediate coated film, such as a sash black spray dust portion of an automobile body, is repaired by coating, the portion coated with the sash black paint is masked, and the above-described repair paint is applied by a manual spray coating method over the range slightly wider than the spray dust portion. Then, the lustrous agent-containing topcoated film is formed, and the clear film is formed by use of the clear paint as required.

The repair paints according to the present invention comprise the pigments belonging to the same family as the intermediate coated films and vehicle resins belonging to the same family as the lustrous agent-containing topcoating paints, and fulfill the following requirements (A) and (B):
(A) The ratio (PWC₂/PWC₁) of the pigment content by weight of the repair paints (PWC₂) to the pigment content by weight of the intermediate coating paints (PWC₁) is 0.5 to 0.9; and
(B) The lightness difference (N value) in the Munsell lightness indication system between the repaired films and the intermediate coated films after film formation is 2 or less.

When the repair paints fulfilling these requirements are used for repair, the lustrous agents of the film (layers) of the repaired portions are orientated similarly to the lustrous agents of the film (layers) of the nonrepaired portions, thereby resulting in approximation in flip-flop property and color-flop property, and approximation in light reflection, which causes no difference in visual hue, independently of highlighted portions or shaded portions. At the same time, the good wet-on-wet property of the repaired films and the topcoated films increases the degree of freedom of line design and repairing steps.

The present invention therefore exhibits an excellent repair function, not only to the faulty portions required to be ground, but also to the spray dust portions such as the sash black spray dust portions of automobile bodies. Accordingly, the repaired state in which no discord in luster and hues between the nonrepaired portions and the repaired portions is observed can be obtained by application of the repairing process of forming the lustrous agent-containing topcoated films, and the clear films as required on the repaired films. When the films of automobile bodies are repaired, the present invention can be applied to any of repairs of new automobiles, partial repairs and repairs in the market.

The present invention is illustrated in detail by the following examples, compared with the comparative examples. The composition of the repair paints used in repairing steps of the respective examples and comparative examples is shown in Table 1, and the composition of the lustrous agent-containing topcoating paints used in coating steps and the repairing steps is shown in Table 2. The composition is indicated by weight parts of solid content, unless otherwise specified.

**TABLE 1**

| Composition\Indication Symbol | A | B | C | D | E |
|---|---|---|---|---|---|
| [Composition of Vehicle Resin] | | | | | |
| Acrylic Resin/Melamine Resin¹⁾ | 80/20 | 80/20 | 80/20 | 80/20 | 80/20 |

| [Pigment] | | | | | |
|---|---|---|---|---|---|
| Titanium Oxide (White) | 29.9 | 27.8 | 18.0 | 8.5 | - |
| Carbon Black (Black) | 0.1 | 0.2 | 2.0 | 5.5 | 7 |
| Hue²⁾ | G | G | DG | SB | B |
| PWC/Lightness | 30/N-8 | 28/N-8 | 20/N-4 | 13/N-2 | 7/N-1 |

| | | | | | |
|---|---|---|---|---|---|
| [Note] 1) Melamine Resin: "U-VAN 20SE" manufactured by Mitsui Toatsu Chemicals, Inc. | | | | | |
| 2) G: gray, DG: dark gray, SB: semiblack, B: black | | | | | |

**TABLE 2**

| Composition\Indication Symbol | (1) | (2) |
|---|---|---|
| [Composition of Vehicle Resin] | | |
| Acrylic Resin/Melamine Resin¹⁾ | 80/20 | 80/20 |

| [Lustrous Agent] | | |
|---|---|---|
| Aluminum Flakes | 10 | 5 |
| Red Interference Mica | - | 5 |

| [Pigment] | | |
|---|---|---|
| Carbon Black (Black) | - | 0.5 |
| Iron Oxide Redock (Red) | - | 0.5 |
| Hue²⁾ | SM | BM |

| | | |
|---|---|---|
| [Note] 1) Melamine Resin: "U-VAN 20SE" manufactured by Mitsui Toatsu Chemicals, Inc. | | |
| 2) SM: silver metallic, BM: beige metallic | | |

The acrylic resin used in the vehicle resin shown in Tables 1 and 2 is a copolymer comprising 5.9 parts by weight of styrene, 27 parts by weight of methyl methacrylate, 44.4 parts by weight of ethyl acrylate, 10 parts by weight of hydroxyethyl methacrylate and 2.3 parts by weight of methacrylic acid, and having a number average molecular weight of 18,000, a hydroxyl value of 45, an acid value of 15 and a solid content of 50% by weight.

### EXAMPLES 1 TO 4 AND COMPARATIVE EXAMPLES 1 TO 6

A 0.8-mm thick dull steel plate subjected to chemical conversion treatment using a zinc phosphate chemical conversion treating agent ("SURFDINE SD2000" manufactured by Nippon Paint Co., Ltd.) was used as a substrate to be coated, which was coated with a cationic electrodeposition paint ("POWERTOP U-50", manufactured by Nippon Paint Co., Ltd.) so as to give a dried film having a thickness of about 25 µm, and then baked at 160°C for 30 minutes. Then, an intermediate coating paint of a polyester-melamine series in which titanium oxide, carbon black and barium sulfate were compounded as pigments [pigment content by weight (PWC): 35% by weight, lightness: N-6.5] was applied to a surface of the resulting undercoated film so as to give a dried film having a thickness of about 40 µm, followed by baking at 140°C for 30 minutes. Then, each of the lustrous agent-containing top-coating paints having the composition described above was applied thereto by electrostatic coating so as to give a dried film having a thickness of about 20 µm, and successively an acrylic resin clear paint ("SUPERLAC O-100 Clear" manufactured by Nippon Paint Co., Ltd.) was applied by a wet-on-wet coating method to obtain a dried film having a thickness of about 35 µm, followed by baking at 140°C for 30 minutes.

A faulty portion ("seeding" portion) of the multi-coated film thus formed was water ground using abrasive paper (#600), and this portion to be repaired was coated with each of the above-described repair paints so that the water-ground potion was covered, thus forming a dried repaired film having a thickness of 5 to 10 µm (provided that not coated for repair in Comparative Example 5). The same lustrous agent-containing topcoating paint as described above was further applied to the repaired surface by a wet-on-wet coating method, varying the thickness of a dried film, and successively the same clear paint as described above was applied by a wet-on-wet coating method to obtain a dried film having a thickness of about 35 µm, followed by baking at 140°C for 30 minutes.

After formation of the repaired film, measurement of the color difference (ΔE) between the nonrepaired surface and the repaired surface, and visual determination were carried out, and results thereof are shown in Tables 3 and 4, comparing to the varying conditions. The color difference (ΔE) and the visual determination were carried out as follows:
Color Difference (ΔE): The color difference (ΔE, the nonrepaired surface was used as a standard level) between the nonrepaired film and the repaired film was measured by use of a spectrophotometric colorimeter ("CM-2002", manufactured by Minolta Co., Ltd.); and
Visual Determination: The total color feeling containing the difference in luster and hue between the nonrepaired film and the repaired film was visually determined.
- o: No discord
- x: Significant discord

**TABLE 3**

| | | Example | | | |
|---|---|---|---|---|---|
| | | 1 | 2 | 3 | 4 |
| Lustrous Agent-Containing Paint | | (1) | (2) | (1) | (2) |
| Repair Paint | | A | A | B | B |
| PWC₂ (wt %) | | 30 | 30 | 28 | 28 |
| Lightness | | 8 | 8 | 6 | 6 |
| (PWC₂/PWC₁) Ratio | | 0.85 | 0.85 | 0.80 | 0.80 |
| Lightness Difference⁽¹⁾ | | 1.5 | 1.5 | -0.5 | -0.5 |

| Thickness of Dried Repaired Topcoated Film | | | | | |
|---|---|---|---|---|---|
| 5 µm | | | | | |
| | ΔE | 0.5 | 0.6 | 0.5 | 0.4 |
| | Visual | o | o | o | o |
| 9 µm | | | | | |
| | ΔE | 0.5 | 0.3 | 0.5 | 0.5 |
| | Visual | o | o | o | o |
| 13 µm | | | | | |
| | ΔE | 0.2 | 0.3 | 0.3 | 0.2 |
| | Visual | o | o | o | o |
| 15 µm | | | | | |
| | ΔE | 0.1 | 0.2 | 0.1 | 0.2 |
| | Visual | o | o | o | o |

| | | | | | |
|---|---|---|---|---|---|
| [Note] (1) Lightness (repaired film - intermediate film) in the Munsell lightness indication system (hereinafter the same) | | | | | |

**TABLE 4**

| | | Comparative Example | | | | | |
|---|---|---|---|---|---|---|---|
| | | 1 | 2 | 3 | 4 | 5 | 6 |
| Lustrous Agent-Containing Paint | | (1) | (2) | (1) | (2) | (1) | (2) |
| Repair Paint | | C | C | D | D | - | E |
| PWC₂ (wt %) | | 20 | 20 | 13 | 13 | - | 7 |
| Lightness | | 4 | 4 | 2 | 2 | - | 1 |
| (PWC₂/PWC₁) Ratio | | 0.57 | 0.57 | 0.37 | 0.37 | - | 0.20 |
| Lightness Difference⁽¹⁾ | | -2.5 | -2.5 | -4.5 | -4.5 | - | -5.5 |

| Thickness of Dried Repaired Topcoated Film | | | | | | | |
|---|---|---|---|---|---|---|---|
| 5 µm | | | | | | | |
| | ΔE | 3.3 | 3.5 | 9.7 | 9.7 | 1.8 | 10.4 |
| | Visual | x | x | x | x | x | x |
| 9 µm | | | | | | | |
| | ΔE | 0.6 | 0.7 | 2.5 | 2.3 | 1.4 | 3.4 |
| | Visual | o | o | x | x | x | x |
| 13 µm | | | | | | | |
| | ΔE | 0.4 | 0.5 | 1.1 | 1.6 | 1.2 | 2.4 |
| | Visual | o | o | x | x | x | x |
| 15 µm | | | | | | | |
| | ΔE | 0.2 | 0.2 | 0.5 | 0.4 | 1.4 | 0.6 |
| | Visual | o | o | o | o | x | o |

As is apparent from the results of Tables 3 and 4, Examples 1 to 4 in which the repair paints and the repairing process of the present invention were used have excellent color difference (ΔE) and visual determination as compared with Comparative Examples 1 to 6 in which the repair paints not fulfilling the requirements of the present invention were used, resulting in excellent repairing effect.

### EXAMPLES 5 TO 8 AND COMPARATIVE EXAMPLES 7 TO 12

A dull steel plate subjected to the same chemical conversion treatment and undercoating as in Example 1 was used as a substrate to be coated, which was coated with an intermediate coating paint of a polyester-melamine series in which titanium oxide, carbon black and barium sulfate were compounded as pigments [pigment content by weight (PWC): 35% by weight, lightness: N-6.5] so as to give a dried film having a thickness of about 40 µm. Then, a sash black paint ("ORGA OP-2 Sash Black", manufactured by Nippon Paint Co., Ltd.) was applied to the left half of a surface of the substrate by a manual spray coating method so as to give a dried film having a thickness of 10 to 15 µm, followed by baking at 140°C for 30 minutes. Then, the portion coated with the sash black paint was masked, and the above-described repair paint was applied to a sash black spray dust portion formed on the right half by a manual spray coating method to form a dried film having a thickness of 5 to 10 µm (provided that not coated for repair in Comparative Example 11). The lustrous agent-containing topcoating paint was further applied to the repaired surface by a wet-on-wet coating method, varying the thickness of a dried film, and successively the same clear paint as described above was applied by a wet-on-wet coating method to obtain a dried film having a thickness of about 35 µm, followed by baking at 140°C for 30 minutes.

For a multi-coated film in which a topcoated film and a clear film were formed on the repaired film formed on the sash black spray dust portion, measurement of the color difference (ΔE) between the nonrepaired surface and the repaired surface, and visual determination were carried out in the same manner as in Example 1, and results thereof are shown in Tables 5 and 6, comparing to the varying conditions. These results of Tables 5 and 6 show that the repair paints and the repairing process of the present invention also exhibit sufficient effect to the spray dust portions coated in different colors.

**TABLE 5**

| | | Example | | | |
|---|---|---|---|---|---|
| | | 5 | 6 | 7 | 8 |
| Lustrous Agent-Containing Paint | | (1) | (2) | (1) | (2) |
| Repair Paint | | A | A | B | B |
| PWC₂ (wt %) | | 30 | 30 | 28 | 28 |
| Lightness | | 8 | 8 | 6 | 6 |
| (PWC₂/PWC₁) Ratio | | 0.85 | 0.85 | 0.80 | 0.80 |
| Lightness Difference⁽¹⁾ | | 1.5 | 1.5 | -0.5 | -0.5 |

| Thickness of Dried Repaired Topcoated Film | | | | | |
|---|---|---|---|---|---|
| 5 µm | | | | | |
| | ΔE | 0.6 | 0.6 | 0.5 | 0.4 |
| | Visual | o | o | o | o |
| 9 µm | | | | | |
| | ΔE | 0.3 | 0.2 | 0.3 | 0.2 |
| | Visual | o | o | o | o |
| 13 µm | | | | | |
| | ΔE | 0.3 | 0.2 | 0.2 | 0.2 |
| | Visual | o | o | o | o |
| 15 µm | | | | | |
| | ΔE | 0.1 | 0.1 | 0.1 | 0.2 |
| | Visual | o | o | o | o |

**TABLE 6**

| | | Comparative Example | | | | | |
|---|---|---|---|---|---|---|---|
| | | 7 | 8 | 9 | 10 | 11 | 12 |
| Lustrous Agent-Containing Paint | | (1) | (2) | (1) | (2) | (1) | (2) |
| Repair Paint | | C | C | D | D | - | E |
| PWC₂ (wt %) | | 20 | 20 | 13 | 13 | - | 7 |
| Lightness | | 4 | 4 | 2 | 2 | - | 1 |
| (PWC₂/PWC₁) Ratio | | 0.57 | 0.57 | 0.37 | 0.37 | - | 0.20 |
| Lightness Difference⁽¹⁾ | | -2.5 | -2.5 | -4.5 | -4.5 | - | -5.5 |

| Thickness of Dried Repaired Topcoated Film | | | | | | | |
|---|---|---|---|---|---|---|---|
| 5 µm | | | | | | | |
| | ΔE | 3.1 | 3.6 | 9.8 | 10.2 | 12.3 | 11.8 |
| | Visual | x | x | x | x | x | x |
| 9 µm | | | | | | | |
| | ΔE | 0.4 | 0.6 | 2.4 | 2.3 | 2.6 | 2.9 |
| | Visual | o | o | x | x | x | x |
| 13 µm | | | | | | | |
| | ΔE | 0.2 | 0.3 | 1.2 | 1.7 | 2.5 | 2.7 |
| | Visual | o | o | x | x | x | x |
| 15 µm | | | | | | | |
| | ΔE | 0.2 | 0.3 | 0.3 | 0.4 | 0.3 | 0.5 |
| | Visual | o | o | o | o | o | o |

### EXAMPLES 9 TO 12 AND COMPARATIVE EXAMPLES 13 TO 18

A dull steel plate subjected to the same chemical conversion treatment and undercoating as in Example 1 was used as a substrate to be coated, which was coated with an intermediate coating paint of a polyester-melamine series in which titanium oxide, carbon black and barium sulfate were compounded as pigments [pigment content by weight (PWC): 35% by weight, lightness: N-6.5] so as to give a dried film having a thickness of about 40 µm. A faulty portion ("seeding" portion) of the intermediate coated film thus-formed was water-ground using abrasive paper (#600), and this portion to be repaired was coated with each of the above-described repair paints so that the water-ground potion was covered, thus forming a dried repaired film having a thickness of 5 to 10 µm (provided that not coated for repair in Comparative Example 17). The lustrous agent-containing topcoating paint was applied to the repaired surface by a wet-on-wet coating method, varying the thickness of a dried film, and successively the same clear paint as described above was applied by a wet-on-wet coating method to obtain a dried film having a thickness of about 35 µm, followed by baking at 140°C for 30 minutes.

For a multi-coated film in which a topcoated film and a clear film were formed over the entire surface of the repaired film thus-formed on the intermediate coated film, measurement of the color difference (ΔE) between the nonrepaired surface and the repaired surface, and visual determination were carried out in the same manner as in Example 1, and results thereof are shown in Tables 7 and 8, comparing to the varying conditions. As is apparent from the results of Tables 7 and 8, the repair paints and the repairing process of the present invention also exhibit sufficient effect to the repair on the intermediate coated films.

**TABLE 7**

| | | Example | | | |
|---|---|---|---|---|---|
| | | 9 | 10 | 11 | 12 |
| Lustrous Agent-Containing Paint | | (1) | (2) | (1) | (2) |
| Repair Paint | | A | A | B | B |
| PWC₂ (wt %) | | 30 | 30 | 28 | 28 |
| Lightness | | 8 | 8 | 6 | 6 |
| (PWC₂/PWC₁) Ratio | | 0.85 | 0.85 | 0.80 | 0.80 |
| Lightness Difference⁽¹⁾ | | 1.5 | 1.5 | -0.5 | -0.5 |

| Thickness of Dried Repaired Topcoated Film | | | | | |
|---|---|---|---|---|---|
| 5 µm | | | | | |
| | ΔE | 0.6 | 0.6 | 0.6 | 0.5 |
| | Visual | o | o | o | o |
| 9 µm | | | | | |
| | ΔE | 0.5 | 0.3 | 0.4 | 0.5 |
| | Visual | o | o | o | o |
| 13 µm | | | | | |
| | ΔE | 0.3 | 0.3 | 0.3 | 0.3 |
| | Visual | o | o | o | o |
| 15 µm | | | | | |
| | ΔE | 0.2 | 0.1 | 0.2 | 0.3 |
| | Visual | o | o | o | o |

**TABLE 8**

| | | Comparative Example | | | | | |
|---|---|---|---|---|---|---|---|
| | | 13 | 14 | 15 | 16 | 17 | 18 |
| Lustrous Agent-Containing Paint | | (1) | (2) | (1) | (2) | (1) | (2) |
| Repair Paint | | C | C | D | D | - | E |
| PWC₂ (wt %) | | 20 | 20 | 13 | 13 | - | 7 |
| Lightness | | 4 | 4 | 2 | 2 | - | 1 |
| (PWC₂/PWC₁) Ratio | | 0.57 | 0.57 | 0.37 | 0.37 | - | 0.20 |
| Lightness Difference⁽¹⁾ | | -2.5 | -2.5 | -4.5 | -4.5 | - | -5.5 |

| Thickness of Dried Repaired Topcoated Film | | | | | | | |
|---|---|---|---|---|---|---|---|
| 5 µm | | | | | | | |
| | ΔE | 3.1 | 2.8 | 8.5 | 8.2 | 2.0 | 10.0 |
| | Visual | x | x | x | x | x | x |
| 9 µm | | | | | | | |
| | ΔE | 0.7 | 0.6 | 2.1 | 2.1 | 1.9 | 4.8 |
| | Visual | o | o | x | x | x | x |
| 13 µm | | | | | | | |
| | ΔE | 0.6 | 0.6 | 1.3 | 1.8 | 1.8 | 2.2 |
| | Visual | o | o | x | x | x | x |
| 15 µm | | | | | | | |
| | ΔE | 0.5 | 0.4 | 0.4 | 0.2 | 1.5 | 0.8 |
| | Visual | o | o | o | o | x | o |

Preferred embodiments of the present invention, including the above-described examples, are enumerated as follows:
(1) A lustrous agent contained in a lustrous agent-containing topcoated film is at least one selected from the group consisting of aluminum flakes, bronze flakes, tin flakes, gold flakes, silver flakes, titanium metal flakes, stainless steel flakes, nickel-copper flakes, pearl mica (white mica), interference mica and colored mica;
(2) A lustrous agent contained in a lustrous agent-containing topcoated film is at least one selected from the group consisting of aluminum flakes, pearl mica (white mica), interference mica and colored mica;
(3) A pigment contained in a repair paint is at least one selected from the group consisting of azo lake pigments, insoluble azo pigments, condensed azo pigments, phthalocyanine pigments, indigo pigments, perynone pigments, perylene pigments, dioxazine pigments, quinacridone pigments, isoindolinone pigments, metal complex pigments, chrome yellow, yellow iron oxide, red iron oxide, carbon black, titanium oxide, calcium carbonate, ballium sulfate, clay and talc;
(4) A pigment contained in a repair paint is a mixed pigment of carbon black and titanium oxide;
(5) A vehicle contained in a repair paint is a mixture of at least one thermosetting resin selected from the group consisting of film-forming resins such as acrylic resins, polyester resins, alkyd resins and fluorine resins and an amino resin and/or a block polyisocyanate compound, and preferably a combination of an acrylic resin and an amino resin and/or a block polyisocyanate compound;
(6) In a repair paint, the ratio (PWC₂/PWC₁) of the pigment content by weight of a repair paint (PWC₂) to the pigment content by weight of a intermediate coating paint (PWC₁) is established to 0.6 to 0.8; and
(7) In a repair paint, the lightness difference (N value) in the Munsell lightness indication system between a repaired film and an intermediate coated film after film formation is established to 1.5 or less.

According to the paints for repairing lustrous films and the repairing processes of the present invention, the excellent repairing effect is achieved to the faulty portions of the multi-coated films requiring a grinding treatment and the spray dust portions such as the sash black spray dust portions of automobile bodies, and it becomes possible to obtain the repaired state having no discord in luster and hue between the nonrepaired portions and the repaired portions. Further, the good wet-on-wet property of the repaired films and the topcoated films increases the degree of freedom of line design and repairing steps. Accordingly, when the films of automobile bodies are repaired, the paints for repairing lustrous films and the repairing process of the present invention can be applied to any of repairs of new automobiles, partial repairs and repairs in the market.

While the invention has been described in detail and with reference to specific embodiments thereof, it will be apparent to one skilled in the art that various changes and modifications can be made therein without departing from the spirit and scope thereof.

## Claims

1. A repair paint for restoring a faulty portion of a multi-coated film including an intermediate-coated film, a lustrous agent-containing topcoated film, and a clear film formed as required, or a spray dust portion painted in a different color on a surface of the intermediate coated film, wherein said paint comprises a pigment of the same family as that of said intermediate coated film and a vehicle resin of the same family as that of said lustrous agent-containing topcoated film, and fulfills the following requirements (A) and (B):
(A) The ratio (PWC₂/PWC₁) of the pigment content by weight of the repair paint (PWC₂) to the pigment content by weight of an intermediate-coating paint (PWC₁) is 0.5 to 0.9; and
(B) The lightness difference (N value) in the Munsell lightness indication system between a repaired film and the intermediate coating film after film formation is 2 or less.

2. A process for repairing a lustrous agent-containing film, which comprises grinding a faulty portion of a multi-coated film including an intermediate coated film, a lustrous agent-containing topcoated film, and a clear film formed as required; applying the repair paint for restoring a faulty portion of a multi-coated film including an intermediate-coated film, a lustrous agent-containing topcoated film, and a clear film formed as required, wherein said paint comprises a pigment of the same family as that of said intermediate coated film and a vehicle resin of the same family as that of said lustrous agent-containing topcoated film, and fulfills the following requirements (A) and (B):
(A) The ratio (PWC₂/PWC₁) of the pigment content by weight of the repair paint (PWC₂) to the pigment content by weight of an intermediate-coating paint (PWC₁) is 0.5 to 0.9; and
(B) The lightness difference (N value) in the Munsell lightness indication system between a repaired film and the intermediate coating film after film formation is 2 or less to the faulty portion to form a repaired film; and then forming a lustrous agent-containing topcoated film and a clear film as required in turn.

3. A process for repairing a lustrous agent-containing film, which comprises applying the repair paint for restoring a spray dust portion painted in a different color on a surface of the intermediate coated film, wherein said paint comprises a pigment of the same family as that of said intermediate coated film and a vehicle resin of the same family as that of said lustrous agent-containing topcoated film, and fulfills the following requirements (A) and (B):
(A) The ratio (PWC₂/PWC₁) of the pigment content by weight of the repair paint (PWC₂) to the pigment content by weight of an intermediate-coating paint (PWC₁) is 0.5 to 0.9; and
(B) The lightness difference (N value) in the Munsell lightness indication system between a repaired film and the intermediate coating film after film formation is 2 or less to a spray dust portion painted in a different color on a surface of an intermediate coated film, and then forming a lustrous agent-containing topcoated film and a clear film as required in turn.

4. The process as claimed in claim 2, wherein said faulty portion of a multi-coated film is an intermediate-coated film.

5. The process as claimed in claim 2, wherein said faulty portion of a multi-coated film is a lustrous agent-containg topcoated film or clear film.

6. The process as claimed in claim 3, wherein said spray dust portion is a sash black spray dust portion of an automobile body.

7. The repair paint as claimed in claim 1, wherein said lustrous agent of said lustrous agent-containing topcoated film is at least one selected from the group consisting of aluminum flakes, bronze flakes, tin flakes, gold flakes, silver flakes, titanium metal flakes, stainless steel flakes, nickel-copper flakes, pearl mica (white mica), interference mica and colored mica.

8. The repair paint as claimed in claim 1, wherein said lustrous agent of said lustrous agent-containing topcoated film is at least one selected from the group consisting of aluminum flakes, pearl mica (white mica), interference mica and colored mica.

9. The repair paint as claimed in claim 1, wherein said pigment for the repair paint is at least one selected from the group consisting of azo lake pigments, insoluble azo pigments, condensed azo pigments, phthalocyanine pigments, indigo pigments, perynone pigments, perylene pigments, dioxazine pigments, quinacridone pigments, isoindolinone pigments, metal complex pigments, chrome yellow, yellow iron oxide, red iron oxide, carbon black, titanium oxide, calcium carbonate, ballium sulfate, clay and talc.

10. The repair paint as claimed in claim 1, wherein said pigment for the repair paint is a mixed pigment of carbon black and titanium oxide.

11. The repair paint as claimed in claim 1, wherein said vehicle resin is a mixture of at least one thermosetting resin selected from the film-forming resin group consisting of acrylic resins, polyester resins, alkyd resins and fluorine resins and an amino resin and/or a block polyisocyanate compound.

12. The repair paint as claimed in claim 1, wherein said vehicle resin is a mixture of an acrylic resin and an amino resin and/or a block polyisocyanate compound.

13. The repair paint as claimed in claim 1, wherein said ratio (PWC₂/PWC₁) is 0.6 to 0.8.

14. The repair paint as claimed in claim 1, wherein said lightness difference (N value) is 1.5 or less.

15. The process as claimed in claims 2 or 3, wherein said lustrous agent of said lustrous agent-containing topcoated film is at least one selected from the group consisting of aluminum flakes, bronze flakes, tin flakes, gold flakes, silver flakes, titanium metal flakes, stainless steel flakes, nickel-copper flakes, pearl mica (white mica), interference mica and colored mica.

16. The process as claimed in claims 2 or 3, wherein said lustrous agent of said lustrous agent-containing topcoated film is at least one selected from the group consisting of aluminum flakes, pearl mica (white mica), interference mica and colored mica.

17. The process as claimed in claims 2 or 3, wherein said pigment for the repair paint is at least one selected from the group consisting of azo lake pigments, insoluble azo pigments, condensed azo pigments, phthalocyanine pigments, indigo pigments, perynone pigments, perylene pigments, dioxazine pigments, quinacridone pigments, isoindolinone pigments, metal complex pigments, chrome yellow, yellow iron oxide, red iron oxide, carbon black, titanium oxide, calcium carbonate, ballium sulfate, clay and talc.

18. The process as claimed in claims 2 or 3, wherein said pigment for the repair paint is a mixed pigment of carbon black and titanium oxide.

19. The process as claimed in claims 2 or 3, wherein said vehicle resin is a mixture of at least one thermosetting resin selected from the film-forming resin group consisting of acrylic resins, polyester resins, alkyd resins and fluorine resins and an amino resin and/or a block polyisocyanate compound.

20. The process as claimed in claims 2 or 3, wherein said vehicle resin is a mixture of an acrylic resin and an amino resin and/or a block polyisocyanate compound.

21. The process as claimed in claims 2 or 3, wherein said ratio (PWC₂/PWC₁) is 0.6 to 0.8.

22. The process as claimed in claims 2 or 3, wherein said lightness difference (N value) is 1.5 or less.
